Europäisches Patentamt

European Patent Office

Office européen des brevets

(19)

(11) Publication number: **0 314 601**
**A2**

(12) **EUROPEAN PATENT APPLICATION**

(21) Application number: **88500101.6**

(22) Date of filing: **27.10.88**

(51) Int. Cl.4: **B 62 K 3/04**

(30) Priority: **29.10.87 ES 8703354**

(43) Date of publication of application:
**03.05.89 Bulletin 89/18**

(84) Designated Contracting States: **BE DE FR IT NL**

(71) Applicant: **Simon Molina, Simon
Cra. Loeches Km. 1,500
Torrejon de Ardoz (Madrid) (ES)**

(72) Inventor: **Simon Molina, Simon
Cra. Loeches Km. 1,500
Torrejon de Ardoz (Madrid) (ES)**

(74) Representative: **Gonzalez Vacas, Eleuterio
Calle Sagasta, 4
E-28004 Madrid (ES)**

(54) **Improved bicycle.**

(57) Improved bicycle in which the frame is comprised of a horizontal bar (1) the front fork (2) and the pair of tubes (5-6) and whose handlebars (3), saddle (4) and axle with pedals (9) are shifted backwards so that the cyclist's weight can weigh on the back wheel preferably and besides, an important characteristic is that the doughnut shaped axle (9) of the pedals is situated further back than the front part of the back wheel.

FIG.2

EP 0 314 601 A2

**Description**

## SECTOR OF THE TECHNIQUE

These improvements are geared towards the manufacture of bicycles in general and more particularly those used in competition.

STATE OF THE TECHNIQUE

Bicycles known up to now, are made of a frame comprised of tubular parts or sectors, which in the lower sector have an axle that has connecting rods fixed on which are projected in a diametrically opposite direction, and move an indented plate linked up by a chain with a pinion fixed in the hub of the back wheel.

The front wheel is suspended between two arms of a fork that ends in a shank at the top, into which a central handlebar arm is connected telescopically.

The axle that has the pedals is situated between the two wheels of the bicycle.

In all the types known, these same characteristics are maintained and no substantial variations have been produced.

The improved bicycle that is proposed, has the advantageous feature of requiring less thrust than conventional bicycles, so that the effort made by the cyclist is likewise less, due to the fact that all of the driving power is produced in the back axle and not shifted forwards as in the case of known bicycles, in which, invariably, the axle of the pedals is situated a long distance in front of the back wheel.

The type of bicycle proposed therefore, has the peculiarity of having the frame shifted towards the back, and with it the handlebars, the saddle, and the plate, which means that the cyclist's weight is also shifted backwards.

This backwards shifting of the handlebars and the saddle is obtained by setting up the frame in this direction. Displacement of the plate is obtained by doing away with its classical axle and substituting the whole thing with two indented plates, one on each side of the bicycle, leaned against the sides of another two fixed discs, like sides of a reel, which instead of a central axle has individual axles which jut out and are geometrically, but not physically aligned.

In this way, there are two chains of different measurements, one on each side, which subsequently lock into two other pinions, one at each side, which synchronize the movement of the pedals, since these are really independent of each other.

Except for the upper bar, the frame is made of lengths, comprised of two fine tubes, instead of single lengths of normal tubes, reducing the weight of the bicycle, which to sum up, is a bicycle that is very appropriate for competition and robust for cycling, provided with two plates, two back pinions, two chains, a chasis with a high CX shielding factor, short driving unit coupled onto the back wheel, and optionally standardized distance between the axle's total height and length.

Now that the Model as a whole has been understood more clearly, other details and characteristics of it will be pointed out in the course of the description that is given below.

A broader idea of the invention, is provided by the following description in which reference is made to the sheet of illustrations attached to this report, in which in a somewhat sketchy way and only as a means of illustration, the preferred details of the invention are represented according to a case in which it is made in practice.

In these drawings, similar marks of reference are used to indicate pieces, units or parts, which correspond to the different views presented, and these pieces, details and organization are defined in a specific way throughout the report, and are later specified in the final claim notes.

In these drawings:

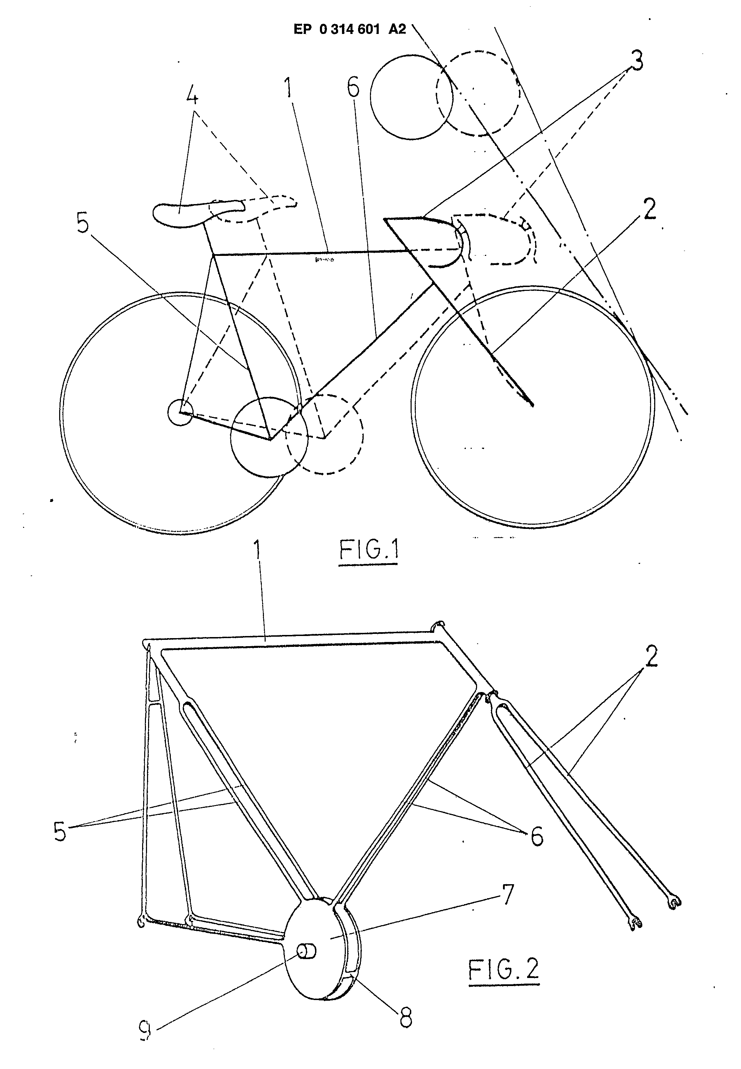

Figure 1 shows a sketch of the proposed bicycle, which has been drawn with continuous strokes, to better appreciate its distinctive features compared with a conventional bicycle drawn by dotted lines in the same figure. The circles situated approximately above the handlebars, represent the cyclist's head in the position corresponding to the proposed bicycle (continuous strokes) and the conventional bicycle (dotted lines). It can be observed that when the head is shifted backwards in the bicycle proposed, the tilt is greater and resistence to the air, less.

Figure 2, contains a perspective of the frame, and it can be seen clearly that with the exception of the bar, the remaining lengths of the frame are made of pairs of fine tubes, as well as the fact that there is a sort of reel at the bottom, made of a double circualr part which is joined outside but not axialwise to allow the wheel to enter this piece, which has two individual axles projected towards the sides, to receive the indented plates for the respective chains.

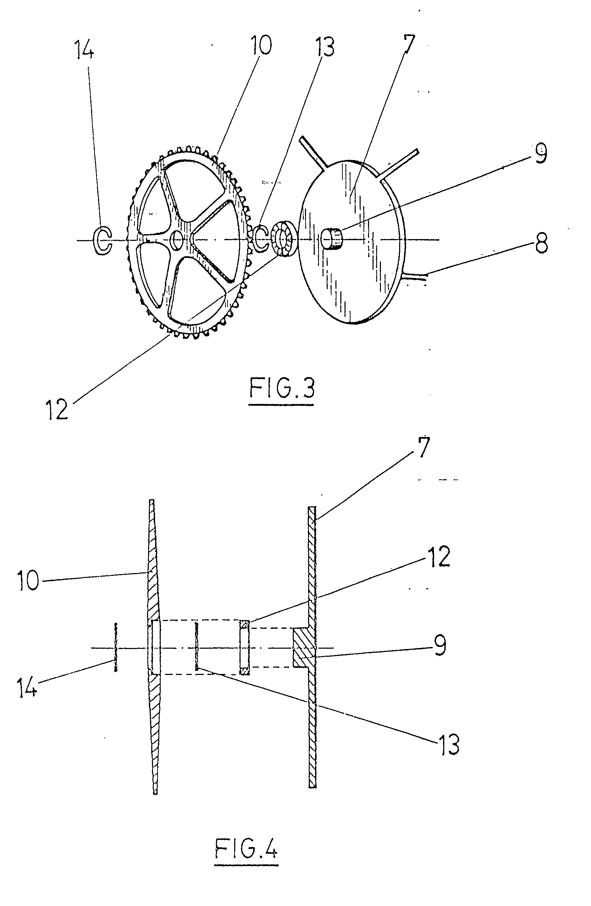

Figures 3 and 4, illustrate two views, in perspective and in elevation respectively, of the parts that comprise the positioning of the plate at each side of the bicycle.

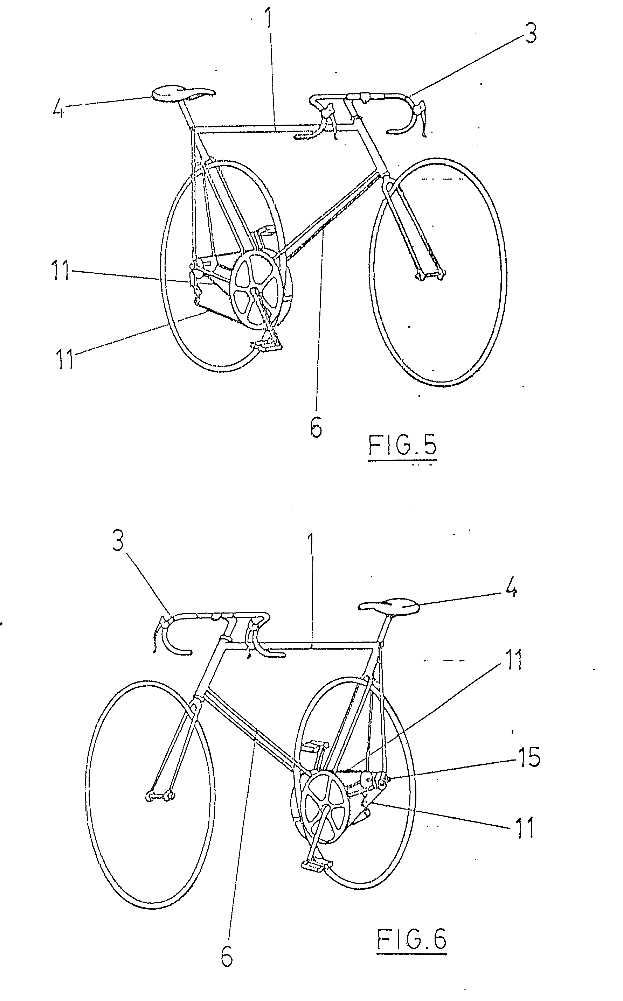

Figures 5 and 6 contain perspective views of the proposed bicycle, from the right and left sides respectively. It can be seen that in the back axle there is a fixed or floating pinion also called a free pinion, drawn at the left side specifically, to synchronize the movement of the pedals, which can in fact be linked together directly.

It can be seen that the proposed bicycle has a frame -1-whose fork -2- is more tilted than usual, so that the handlebars -3- are situated further back than in conventional bicycles, which also happens with the saddle -4- which is placed practically above the back wheel, due to the shape of the said frame.

The sloped lengths -5- and -6- of the frame, are made of pairs of tubes, which converge at the bottom on the respective circular sides -7- of the sort of reel that exists there, which are fixed and are not connected axialwise, but through perimetral links -8-. In these aforementioned discoidal pieces -7- there are each of two individual axles -9- projected outwards respectively, to receive the indented plates -10-, one on each side, for the respective chains -11-, which are likewise situated at each of the two sides, and these plates are situated on the bearings -12-, between the small brakes -13- and -14-.

The floating or fixed pinion -15- is at the back part, and its mission is to synchronize the pedals, since there can be a common axle between them which is normal in known bicycles.

After observing the drawings and the above description, it will be readily understood that the present idea provides a simple and effective construction, that can be put into practice very easily, and assure relatively cheap manufacture.

We reiterate, that in the object that comprises the present invention, any modifications of detail advised by circumstances and practice may be introduced, provided that the essence of the invention described is not changed, altered or modified by the variations introduced.

## Claims

1. Improved bicycle that is basically characteristic because, with the exception of the bar, it has a frame that is comprised of pairs of tubes, and whose handlebars, saddle and pedals are shifted backwards, so that the cyclist's weight will rest on the back wheel to a greater extent.

2. Improved bicycle as per the previous paragraph, which is basically characteristic because the theoretical axle of the pedals, is situated further back than the front part of the back wheel.

3. Improved bicycle, as per the previous paragraph, which is basically characteristic because in the lower part of the frame, there is a double fixed discoidal part, which is joined peripherally only, by means of bridges, and in which there are each of two geometrically axial axles, independent of each other, which are projected towards the respective sides.

4. Improved bicycle as per the previous paragraphs, which is basically characteristic because the back wheel penetrates the inside of the double discoidal piece, with the peculiarity that in the axles that are projected towards the outside, in the respective sides of the latter, there are two indented plates, which can be activated individually, by the respective pedals.

5. Improved bicycle, as per the previous paragraphs, which is basically characteristic because each of the indented plates, that are situated at the respective sides, receives a chain that subsequently locks into pinions that are independent of the back wheel axle, with the peculiarity that one of these pinions is floating or fixed, to synchronize the movement of the pedals, which do not have a common axle.

EP 0 314 601 A2

FIG.1

FIG.2

FIG.3

FIG.4

FIG.5

FIG.6